(19) Europäisches Patentamt / European Patent Office / Office européen des brevets

(11) **EP 1 861 578 B1**

(12) **EUROPEAN PATENT SPECIFICATION**

(45) Date of publication and mention
of the grant of the patent:
**27.02.2019 Bulletin 2019/09**

(21) Application number: **05708690.2**

(22) Date of filing: **02.03.2005**

(51) Int Cl.:
***E21B 17/042*** *(2006.01)*

(86) International application number:
**PCT/IB2005/000587**

(87) International publication number:
**WO 2006/092649 (08.09.2006 Gazette 2006/36)**

(54) **DRILL STEM CONNECTION**

BOHRSTANGENVERBINDUNG

RACCORDEMENT DE MASSE-TIGE

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**05.12.2007 Bulletin 2007/49**

(60) Divisional application:
**19150169.1**

(73) Proprietor: **Tuboscope Vetco (France) SAS
59145 Berlaimont (FR)**

(72) Inventors:
• **GRANGER, Scott L.**
**Houston, TX 77089 (US)**
• **CHANCEY, Roger D.**
**Humble, TX 77338 (US)**
• **WILLIAMSON, Joseph Stephen**
**Houston, TX 77090 (US)**

(74) Representative: **Rankin, Douglas et al
Marks & Clerk LLP
Aurora
120 Bothwell Street
Glasgow G2 7JS (GB)**

(56) References cited:
**EP-B1- 1 200 704     WO-A1-98/50721
WO-A1-2005/095840     CA-A1- 1 084 553
CA-A1- 2 408 110     US-A- 4 548 431
US-A- 4 548 431     US-A- 4 549 754
US-A- 4 946 201     US-A- 4 946 201
US-A- 5 492 375     US-A- 5 492 375
US-B1- 6 244 631     US-B1- 6 447 025
US-B2- 6 478 344     US-B2- 6 511 102**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

1. Field of the Invention

This invention concerns drill stem threaded connections in general. In particular the invention is for a tool joint and a resulting drill string where the tool joint connects drill pipe sections and other elements of the drill stem together from the surface to the drill bit. Still more particularly, this invention is for a tool joint having internal and external make-up shoulders for high torque application of rotary drilling.

2. Description of Prior Art

Deep wells such as for oil and gas are drilled with a rotary drill bit rotated by a drill stem which consists of a bottomhole assembly, a string of drill pipe, a kelly or top drive, and all associated equipment in the rotating string to the drill bit. The drill pipe string is made-up of individual members, each about 30 feet in length. The drill pipe members are secured together by a threaded connection, called a tool joint, typically about 1-1/2 feet long. The tool joints must withstand the normal torque encountered during drilling, and also provide sealing to prevent drilling fluid being pumped down the drill pipe from leaking out the joints. Leakage out of the tool joints causes wear due to the abrasiveness of the drilling fluid, which can lead to early failure.

A conventional tool joint (sometimes called an API [American Petroleum Institute] tool joint) is made-up of a pin member and a box member. The pin member has external threads and an external annular make-up shoulder. The box member has internal threads and a rim or face that makes up against the make-up shoulder. In a conventional tool joint there is no internal shoulder in the box member for contact by the nose or face on the end of the pin. When the tool joint members are made-up at the surface of the well, normally they are made-up to a torque that creates a longitudinal stress in the threaded cross section that is about one-half the yield strength of the weaker of the pin or box.

In drilling horizontal or extended reach wells or when the drill string gets stuck in the borehole, it is possible for drilling torque to exceed the make-up torque, applied at the surface of the well. When the drilling torque exceeds the surface make-up torque, additional connection make-up torque occurs. The additional make-up torque imparts higher stresses in the connection which may exceed the yield strength of the pin and box and cause downhole failure. To avoid the possibility of failure, the surface make-up torque should be higher than the drilling torque. Consequently the drill pipe tool joint industry has developed so called "double shoulder tool joints" that have higher torque strength characteristics than API tool joints, allowing higher surface make-up torque. Double shoulder tool joints have not only an external make-up shoulder, but also an internal make-up shoulder and dimensions that cause both shoulders to make up under high torque conditions.

As shown in U.S. Patent 2,532,632, double shoulder tool joints have not only an external make-up shoulder, but an internal make-up shoulder and dimensions that cause both shoulders to make-up under high torque conditions. A double shoulder tool joint can have a substantially increased torsional yield strength (as compared to an API tool joint) without any additional thickness in the pin or box, and without increasing the yield strength of the steel.

The prior art has strived to achieve better and better operating characteristics for a double shoulder tool joint by adjusting dimensions of elements that characterize such a joint. Such elements include the relative lengths of the box counterbore, pin base, the pin nose, and the threads; the relative cross sectional thickness of the box counterbore and the pin nose; and the relative dimensions of the tool joint inner and outer diameters.

A double shouldered connection is also described in U.S. 4,558,431. The box is provided with an internal shoulder located below its threads. The pin has a face on the end of its nose that mates with the internal shoulder in the box. The dimensions of the pin and box are selected so that when hand tightened, the box face contacts the external shoulder of the pin. A clearance exists between the pin nose face and the internal shoulder of the box. When the tool joint is fully made-up to its normal make-up torque, the box face engages the external make-up shoulder to the normal contact pressure. A hand tight clearance is selected such that the pin face exerts little or no pressure against the internal shoulder at normal make-up torque.

The above mentioned U.S. 4,548,431 specifies that the pin base and box counterbore sections have a length at least one-third the length of the engaged threads and that the pin nose should have a length at least one-sixth the length of the engaged threads. For the double shouldered tool joint, described in U.S. 4,548,431, with a 127mm (5") OD and 68.2625mm (2-11/16") ID, the torque to yield the base section of the pin or the counterbore section of the box for a double shouldered joint is 34686Nm (25,583 foot pounds) as compared to 24540Nm (18,100 foot pounds) for an API tool joint with the same OD and ID. The long counterbore section lowers the resistance to deflection thereby allowing reasonable manufacturing tolerances for the hand tight clearance. However, the long counterbore section tends to buckle outward under high torque.

Others in the industry select the hand tight clearance such that the internal shoulder is substantially loaded at the designed surface make-up torque. Designed in this way, the internal shoulder allows a larger surface make-up torque and may therefore be safely used in wells which require a larger drilling torque. When the tool joint is tightened beyond the initial hand tight condition, the counterbore of the box and the pin base section deflect. This deflection allows the pin face to close the hand tight clearance and engage against the internal shoulder. The loading of the pin face and internal shoulder occurs prior to any permanent deformation occurring in the box counterbore and pin base sections.

Expanding the concept of having the internal shoulder loaded at surface make-up torque, U.S. Patent 6,513,804 describes still another double shouldered tool joint design in which the internal shoulder makes up first, because the length from the pin external shoulder to the pin nose is greater than the length from the box face to the box internal shoulder. The pin nose is specified to be twice as long as the box counterbore. Having the internal shoulder contact before the external shoulder creates a risk that the external shoulder may not be sufficiently loaded to effect a seal. The extra long pin nose attempts to overcome this risk by lowering the nose resistance to deflection.

U.S. Patent 5,492,375 describes another design of a double shoulder tool joint with an emphasis on optimizing the torsional strength of a double shouldered connection. The optimization is achieved by assuring that under high torque conditions, the threads are very close to, but not quite at failure in shear prior to yielding of the pin nose and box counterbore or pin base. U.S. 5,492,375 specifies that the length of the engaged threaded section of the pin, which determines the shear area of the threads be such that $A_t$ is equal to or only slightly greater than $1.73(A_L + A_N)$ where $A_L$ is the lesser of the cross-sectional area of the pin base or of the box counterbore and $A_N$ is the cross-sectional area of the pin nose. Optimization by this technique provides only small increases in connection torsional strength.

US 6,447,025 describes a single shoulder tool joint wherein the thread on both the pin and box is modified to substantially increase the crest radius of the stab flank of the thread. According to a preferred embodiment, the crest radius on the pressure flank of the thread is not modified, however, so that a high pressure flank bearing area is maintained. According to preferred embodiments, the crest radius of the stab flank of the thread is approximately four times the crest radius of the pressure flank, and in most applications would be at least two times and less than six times the radius of the pressure flank. But such improvement provides only small increases in connection torsional strength.

US 6,244,631 describes a reliable and cost-efficient drill pipe with high strength and good fluid flow characteristics to optimize drilling for various applications, including ERD projects.

U.S. Patent 5,908,212 describes another double shoulder tool joint design by requiring (1) that the sum of the cross-sectional area of the box counterbore, plus the cross-sectional area of the pin nose be at least 70% of the cross-sectional area of the box, (2) that the taper of the threads be less than one inch per foot, and (3) that the counterbore section axial length be at least 38.1mm (1.5 inches).

A shallow thread taper dramatically increases the strength of the internal shoulder and therefore increases the torsional strength of the connection. However, drill pipe joints with shallow thread tapers require substantially more rotations of the pin with the box during make up, as compared to conventional API tool joints. The additional rig time required to make-up these connections is very expensive and undesirable. The shallow taper also makes connection stabbing and unstabbing more difficult, because the connection must be carefully aligned to avoid thread interference and galling. Further, the shallow taper requires a large loss of the limited tool joint length when the connection is re-machined after wear or damage.

The prior art joints also provide conventional thread form designs which inhibit optimum yield torque characteristics for pipe joints generally and in particular for double shoulder drill pipe joints.

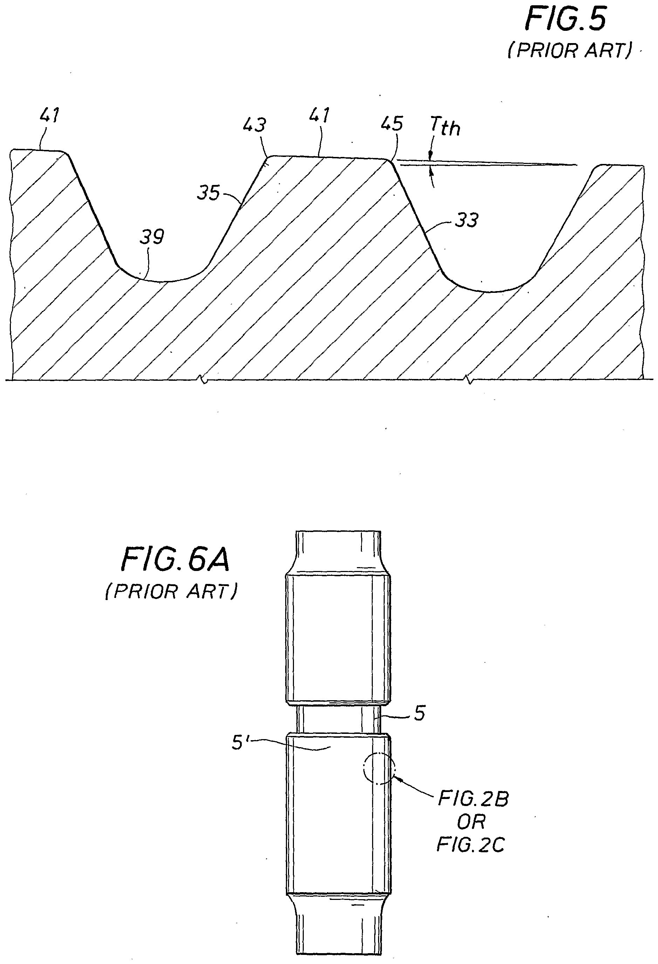

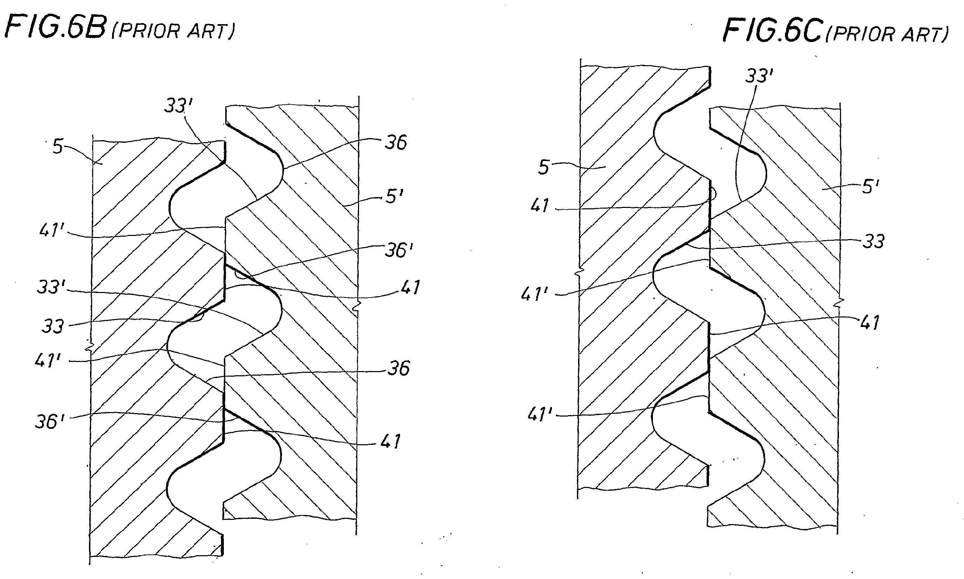

The prior art tool joints are also characterized by a thread form with a crest taper that matches the taper of the threads. Figure 5 of the attached drawings illustrates a prior art thread form where the taper of the crest 41 is the same as the overall taper $T_{th}$ of the threads. A thread form in general is characterized by a thread root 39, a load flank 35, a crest 41, a crest-load radius 43, a crest-stab radius 45 and a stab flank 33. When stabbing elements of the drill pipe joint (i.e., stabbing a pin into a box), it is inevitable that crests of one element will occasionally come to rest on the thread crests of the other. Figures 6A, 6B and 6C illustrate a prior art pin 5 and box 5' being stabbed together with Figures 6B and 6C showing cross sections of the threads of the pin 5 and box 5'. Figure 6B shows the crests 41 of the pin 5 resting on the thread crests 41' of the box 5'. As Figure 6C shows, a rotation of up to about one-half turn is required to move pin 5 axially with respect to box 5' to get past crest 41-crest 41' contact and cause stab flank 33-stab flank 33' contact. If crest to crest contact occurs with an impact, the load flanks 36, 36', stab flanks 33, 33', or both can be permanently damaged near the crests 41, 41', especially because of the small crest to load flank and crest to stab flank radii typically found in conventional tool joints. Even if damage does not occur on stabbing, the pin tool joint crests 41 can wedge into the box tool joint 5'. Such wedging action is exacerbated by the impact. As the thread taper is reduced, the wedging action gets worse. For a friction factor of 0.08, the thread crests 41, 41' are self-holding for thread tapers less than 2"/ft. Self-holding means that the tool joints must be forcibly separated. Forcing the threads past wedging of the thread crests can eventually lead to galling and other damage.

### 3. Identification of Objects of the Invention

A primary object of the invention is to provide a drill stem connection, in particular for a drill pipe tool joint with enhanced yield torque characteristics.

Another object of the invention is to provide a drill pipe tool joint with enhanced yield torque characteristics while simultaneously having a make-up turns characteristic of a conventional API tool joint.

A specific objective of the invention is to provide a drill pipe tool joint that is characterized by a torsional strength that is at least about fifty percent or more than that of a conventional connection of comparable size and with make-up turns about the same as the conventional connection.

Another object of the invention is to provide a double shoulder drill pipe tool joint with an improved thread form in combination with an optimum thread taper such that enhanced torque characteristics result.

Another objective of the invention is to provide a tool joint with a thread design that provides enhanced stabbing characteristics when the pin is stabbed in the box during make up.

Another object of the invention is to provide a tool joint design with a box counterbore length shorter than or equal to the pin nose length in order to avoid box buckling.

Another object of the invention is to provide a tool joint design characterized by primary shoulder and secondary shoulder stresses being within a range of 70% of each other for optimization of load carrying ability within manufacturing tolerances.

Another object of the invention is to provide a thread form for tool joints where crest-to-crest wedging of threads while stabbing is substantially prevented.

Another object of the invention is to provide a thread form for tool joints that allows the pin threads to more easily center within the box threads while providing a more rugged shape with a more narrow crest without reducing the contact area of the load flank.

Another object of the invention is to provide a thread form which (1) provides a reduced stress concentration in the thread root while maximizing the contact area of the load flank and minimizing thread depth, (2) allows for larger critical areas at the primary and secondary shoulders of a double shoulder tool joint thereby providing increased torque capacity of the joint, and (3) reduces the probability of jamming the connection. Another specific objective of the invention is to provide a double shoulder drill pipe tool joint characterized by pin nose and counterbore lengths such that stresses at the primary and secondary shoulders increase at a similar rate as connection torque increases are applied to the connection.

Another object of the invention is to provide a tool joint with an enhanced wall thickness opposite the threads in order to provide greater connection strength.

### SUMMARY OF THE INVENTION

The objects described above along with other features and advantages are incorporated in a double shoulder connection joint having a pin nose cross section area which is at least fifty percent as large as the smaller of the cross section area of the box counterbore or the pin base and having threads which are tapered within a range of between about 1.0 and 1.2 inch per foot, preferably about 1.125 inch per foot. A preferred taper is a compromise between a lower limit of 1.0 inch per foot below which the turns from stabbed to snugged generally exceed that required for API tool joints. The upper limit of 1.2 inch per foot is a limit beyond which yield torque for the tool joint decreases significantly below about a one hundred fifty percent torsional of the yield strength of a conventional API connection of comparable size. The preferred taper is about 1-1/8 inch per foot. With the pin nose cross section size as specified above, the length of the pin nose is provided to be about 1.0 to 1.5 times the counterbore length in order to achieve primary and secondary shoulder stresses increasing at a similar rate as torque increases are applied to the connection.

The thread form of the internal and external threads of the double shouldered pipe joint is characterized by a thread depth $h$ measured between a major radius $\dfrac{D_{MJ}}{2}$ and a minor radius $\dfrac{d_{MI}}{2}$ that is about one-half of the height $(H)$ of a fundamental triangle of the threads.

The internal and external threads are also characterized by a stab flank angle between about 35 and about 42 degrees and a load flank angle between about 25 and 34 degrees. The preferred stab flank angle is about 40 degrees, and the preferred load flank angle is about 30 degrees. The stab flank angle of 40 degrees enables the connection to more easily center itself after stabbing (as compared to a conventional 30 degree stab flank angle), as well as providing a more rugged shape and more narrow crest without reducing the contact area of the load flank. The crest-stab radius of the preferred drill pipe arrangement is enlarged beyond that of a conventional thread form.

The threads are also characterized by the roots of the threads being formed in a shape of a portion of an ellipse.

Furthermore, the crests have a crest taper which slopes at an opposite angle from that of the thread taper angle. The crest taper sloping at an angle opposite that of the thread taper angle makes crest-to-crest wedging unlikely when the pin and box threads are stabbed together.

The structure of the thread form produces the advantages of the objects identified above, because it (1) provides a reduced stress concentration in the thread root while maintaining maximum contact area of the load flank and minimum thread depth, (2) allows for larger critical areas at the primary and secondary shoulders of a double shoulder tool joint thereby providing increased torque capacity of the joint, and (3) reduces the probability of jamming the connection.

The thread form is characterized by a thread pitch of about 6.35mm (0.25 inch) or greater. The preferred thread pitch is about 7.2644mm (0.286 inch). The preferred drill pipe joint is also characterized by the length of the pin nose section being about 31.75mm (1.25 inches) with the length of the counterbore section being about 25.4mm (1 inch). The cross-sectional area of the counterbore section of the box, the cross-sectional area of the pin section at the pin nose, the cross-sectional area of the pin section opposite the box counterbore, and the length of the connected threads are selected such that the strength of the connected threads when torque is applied is substantially greater than the strength in the pin nose or the box counterbore or the cross-section of the pin opposite the box counterbore.

A tool joint may have an inner diameter which varies as a function of tool joint length so that the tool joint wall is thicker opposite the threads than at its ends in order to provide greater strength to the connection at the threads.

BRIEF DESCRIPTION OF THE DRAWINGS

The drawings attached hereto illustrate a preferred embodiment of the invention of which,

Figure 1 is a cross-section of the two drill pipe sections joined end to end by a tool joint according to the invention;
Figure 2 is an enlarged cross-section illustration of the tool joint showing pin and box members made-up and showing tapered threads and a thread form according to the invention;
Figure 3 is an enlarged cross-section of a thread form of the pin threads and the box threads, showing stab and load flanks, root and crest forms and taper according to the invention;
Figure 4 is an enlarged cross-section of a crest section of the thread form showing that the crest of the threads is tapered at an angle opposite the taper of the threads;
Figure 5 illustrates a prior art thread form with a conventional crest arrangement which tapers at the same angle as that of the threads;
Figures 6A, 6B and 6C illustrate possible crest wedging of prior art stabbed tool joints where conventional crest taper angles match that of the threads;
Figures 7A, 7B, 7C illustrate stabbing of pin and box threads of a tool join with a thread form having a thread crest as in Figure 6 which slopes opposite to the thread taper;
Figures 8A and 8B illustrate that an increased stab flank angle and large crest-stab radius of the thread form of Figure 5 allows the pin threads to center into the box threads easier than with conventional thread forms;
Figure 9 is a graph showing a range of acceptable tapers for a preferred embodiment of the double shoulder tool joint of the invention showing that too large a taper decreases yield torque of the connection, but too small a taper requires excessive turns from stabbed to snugged of the connection.

**DESCRIPTION OF PREFERRED EMBODIMENTS OF THE INVENTION**

The description below describes the preferred embodiments by reference to the attached figures which include reference numbers to parts of the tool string and tool joint of the invention. Correspondence between reference numbers and parts follows:

| Reference Number | Description |
|---|---|
| $P_{OD}$ | Pipe Outer Diameter |
| $P_{ID}$ | Pipe Inner Diameter |
| $C/L$ | Center line of joined pipe and tool joint |
| $PU_{ID}$ | Pipe Upset Inner Diameter |
| $TJ_{ID1}$ | Tool Joint Inner Diameter at weld end of joint |
| $TJ_{ID2}$ | Tool Joint Inner Diameter at a middle portion of joint |
| $TJ_{OD}$ | Tool Joint Outer Diameter |
| $L_{TJ}$ | Tool Joint Length |
| 2 | Lower Drill Pipe |

(continued)

| Reference Number | Description |
|---|---|
| 2' | Upper Drill Pipe |
| 3 | Upset portion of lower drill pipe |
| 3' | Upset portion of upper drill pipe |
| 4 | Tool Joint |
| 6 | Lower Weld |
| 6' | Upper Weld |
| 10 | Pin |
| 12 | Box |
| 14 | Box counterbore |
| 16 | Pin Base |
| 18 | External Tapered Pin Threads |
| 20 | Internal Tapered Box Threads |
| 22 | Pin Nose |
| 24 | Box Internal Shoulder |
| 26 | Pin Face or Circular Rim |
| 28 | Box External Shoulder or Box Face or Circular Rim |
| 30 | Pin External Shoulder |
| 32 | Pitch Line of Threads |
| 34 | Stab Flank of Threads |
| 36 | Pressure or Load Flank of Threads |
| $\Theta_S$ | Stab Angle |
| $\Theta_P$ | Pressure or Load Angle |
| $L_{PN}$ | Pin Nose Length |
| $L_{BC}$ | Box Counterbore Length |
| $L_{TH}$ | Length of Engaged Threads |
| $PS$ | Primary Shoulder and Seal |
| $SS$ | Secondary Shoulder |
| $CS_{BC}$ | Cross Section of Box Counterbore |
| $CB_{PB}$ | Cross Section of Pin Base |
| $CS_{PN}$ | Cross Section of Pin Nose |
| 40 | Thread Root |
| 42 | Thread Crest |
| 44 | Transition Shape from Load Flank to Crest |
| 46 | Transition Shape from Crest to Stab Flank |
| 48 | Fundamental Triangle of Thread Shape |
| $H$ | Height of Fundamental Triangle |
| $h$ | Thread Depth |
| $\dfrac{D_{MJ}}{2}$ | Major Radius (1/2) |
| $\dfrac{D_P}{2}$ | Pitch Radius (1/2) |
| $\dfrac{d_{MI}}{2}$ | Minor Radius (1/2) |
| $E$ | Ellipse for Root Form |
| $E_{MI}$ | Ellipse Minor Diameter |
| $E_{MJ}$ | Ellipse Major Diameter |
| $T_{th}$ | Thread Taper |

(continued)

| Reference Number | Description |
|---|---|
| $T_C$ | Crest Taper |

Description of Drill Pipe with Tool Joints

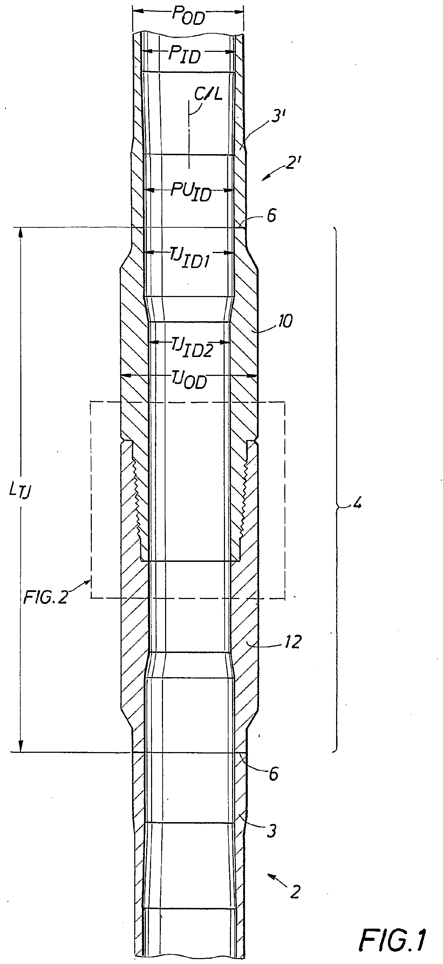

Figure 1 illustrates lower and upper drill pipes 2, 2' connected together by means of a tool joint 4 according to the invention. The drill pipes 2, 2' have upset portions 3, 3' which have thicker wall thickness for welds 6, 6' at the ends of the drill pipe to the ends of the tool joint 4. The Outer Diameter of the pipes 3, 3' is indicated as $P_{OD}$ while the pipe inner diameter, for almost all of its 30' length, is indicated as $P_{ID}$. The inner diameter of the ends of the pipe 3, 3' at the upset portion is indicated as $PU_{ID}$ which approximately matches the inner diameter $TJ_{ID}$ of the weld ends of the Tool Joint. While the outer diameter of the tool joint $TJ_{OD}$ is substantially constant along the length of the tool joint $L_{TJ}$, the inner diameter of the tool joint narrows from $TJ_{ID1}$, at the weld ends of the joint to $TJ_{ID2}$ for the section adjacent the threads of the pin 10 and box 12. According to the invention, $TJ_{ID2}$ may be 3.175mm (1/8 inch) (or more) smaller in diameter than $TJ_{ID1}$, in order to provide thicker wall thickness for the threaded section of the tool joint 4. It has been found that while too small an inside diameter for the tool joint may decrease allowable fluid flow rates during drilling operations, a small decrease of 3.175mm (1/8 inch) or 6.35mm (1/4 inch) inside diameter over a short length can be tolerated while providing significant enhancement to the torque strength of the joint. It is preferred that the length of the tool joint where $TJ_{ID2}$ applies be not greater than about 2/3 of the total tool joint length.

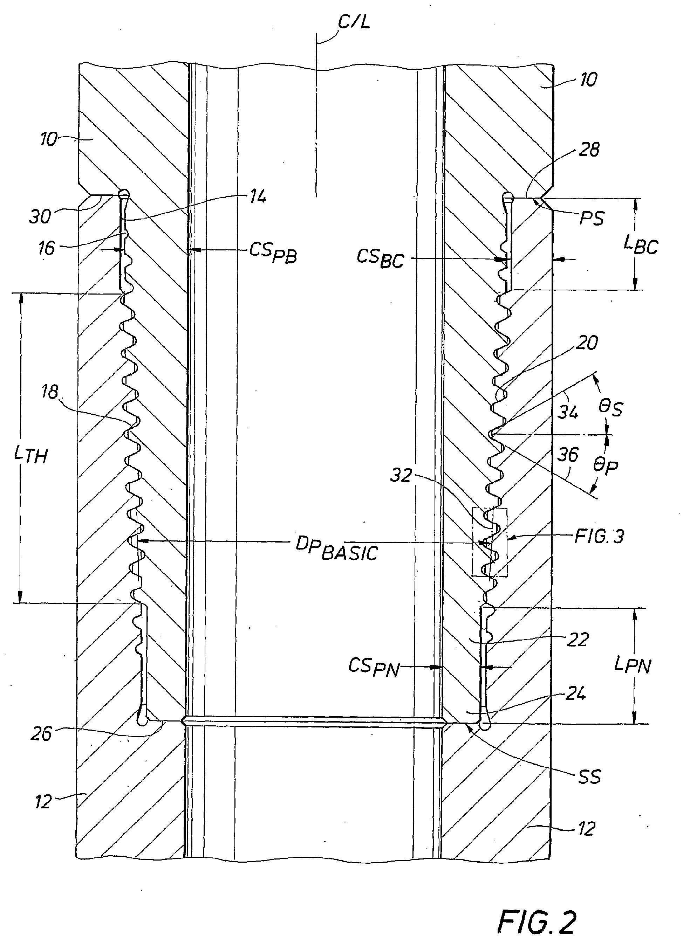

Figure 2 illustrates the double shoulder tool joint fully made up. The pin nose cross sectional area $CS_{PN}$ is at least fifty percent as large as the smaller of the cross sectional area of the box counterbore $CS_{Bc}$ or cross sectional area of the pin base $CS_{PB}$. Such a relationship in pin nose, pin base, and counterbore cross section areas results in at least fifty percent increase in torsional strength of the connection 4 as compared to a conventional API connection of comparable size. Further, as explained below, the thread taper of the box threads 20 and the pin threads 18 is within a range between about 1 inch/foot and 1.2 inch/foot, and preferably about 1-1/8" per foot. Furthermore, with the pin base cross section $CS_{PN}$ being about fifty percent smaller than the box counterbore cross section $CS_{BC}$, the length of the pin nose $L_{PN}$ should be about one to one and one-half times as long as the counterbore length $L_{BC}$ in order that the stresses at the primary PS and secondary SS shoulders increase at about the same rate as torque is applied to the connection.

It is essential that when excessive torque is applied to the tool joint, that the threads 18 and 20 do not fail in shear before the box counterbore 14 or the pin nose 22 yield or buckle or before yielding of the cross-section of the pin base 16 opposite the box counterbore. Accordingly, the pin nose cross-sectional area $CS_{PN}$ and the length $L_{TH}$ of the internal threads 20 connected to the external threads 18 and the cross-section of the box counterbore $CS_{BC}$ and the counterbore length $L_{PN}$ are designed and arranged as specified above such that the strength of the connected threads is greater than the torque strength of the pin nose 22 or the box counterbore 14. Since thread failure is worse than pin or box yield, a safety factor in the thread strength is provided for an example even if exact optimization of the connection torsional strength does not result. The preferred safety factor in thread strength is provided with the pin nose cross-section $CS_{PN}$ being least 50% as large as the cross-section of the box counterbore $CS_{BC}$.

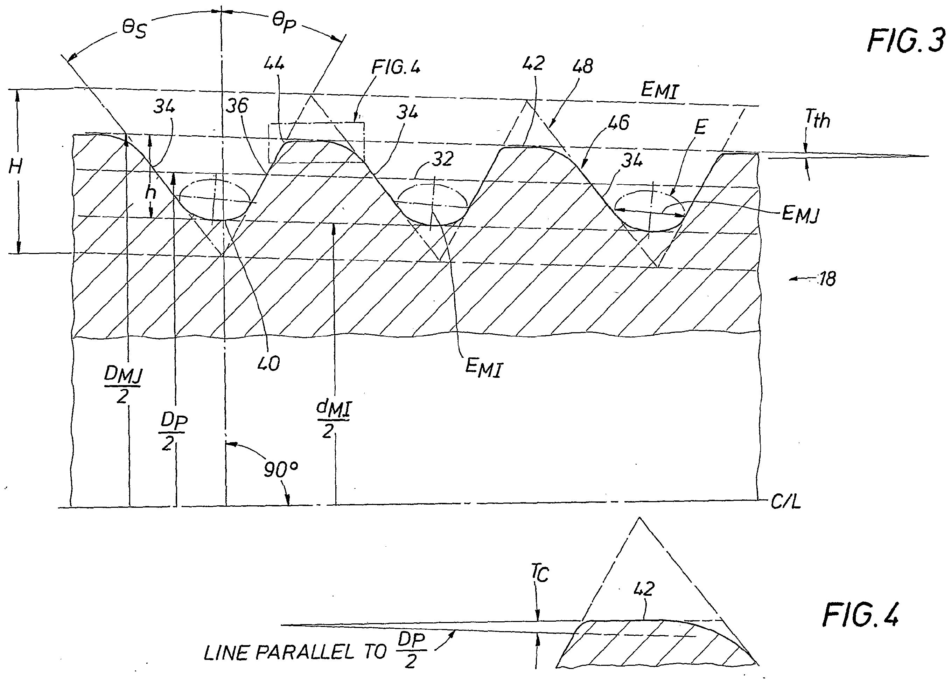

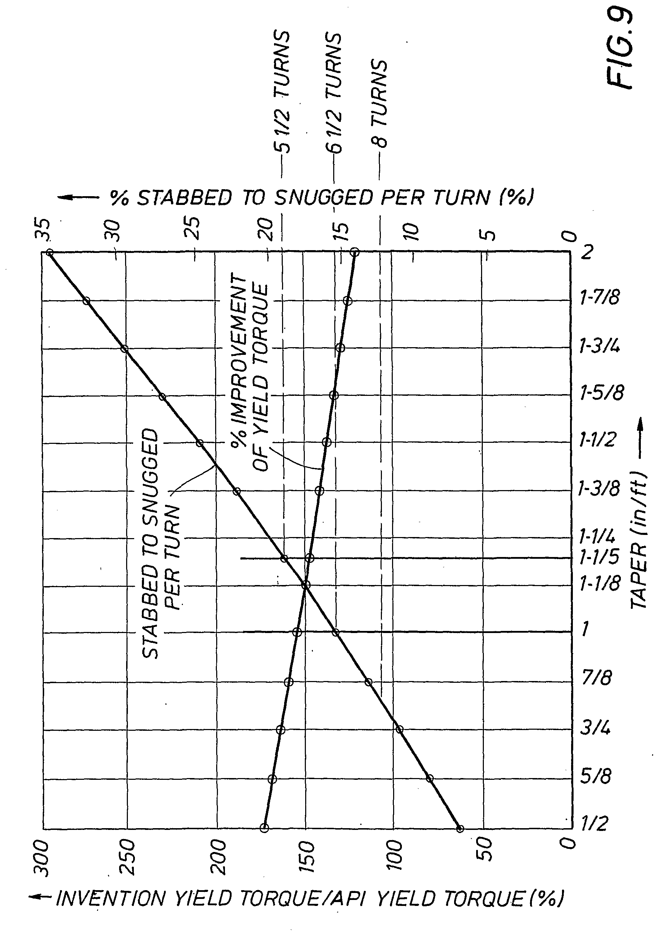

Figure 9 illustrates a parametric study for a preferred embodiment of the invention (i.e., with $CS_{PN} \geq .5\,CS_{BC}$, $CS_{PN} \geq .5\,CS_{PB}$, and $L_{PN} \cong (1.0\text{ to }1.5)L_{BC}$), a thread pitch of 7.2644mm (0.286 inch) (137.8 threads/m (3.5 threads/inch)), a thread depth of about 2.54mm (0.1 inch) and a pitch diameter of about 96.52 (3.8 inch) showing two parameters which characterize the tool joint of the invention plotted as a function of thread taper in inch/foot. The left ordinate or y-axis represents the ratio of yield torque of the connection of Figures 2 and 3 to yield torque of an API connection (e.g., NC 38). The curve labelled "Invention Yield Torque/API Yield Torque (%)" shows that the connection of Figures 2 and 3 produces increased yield torque, as compared to API connections, with decreases in thread taper from 2 in/ft to 1/2 in/ft. The ratio of yield torque is about 150% at a thread taper of 1-1/8 in/ft.

The right ordinate represents a parameter that indicates how many turns it takes for the connection to reach a snugged condition after initial stabbing. The curve, labelled "stabbed to snugged per turn," shows that for the connection with 1/2 in/ft taper, one turn produces only about 7% of the axial travel necessary from the threads to reach snugged. On the other hand, for a 2 in/ft taper, one turn produces close to 35% of the axial travel of the threads to reach snugged. The stabbed to snugged curve indicates that for a taper of 1-1/8 in/ft, the stabbed to snugged per turn is about 17%. In other words, it takes about 6 turns to achieve snugging from initial stabbing for the connection with a taper of 1-1/8 in/ft.

A range of tapers has been discovered for the preferred embodiment of the tool joint described above that produces acceptable speed when making up the connection while maintaining an increased torsional strength of about 150% of a conventional API connection. As Figure 9 illustrates, a lower limit of taper of about 1 in/ft and an upper limit of taper of about 1.20 in/ft produces acceptable limits of turns from stabbed to snugged of about 6-1/2 turns and 5-1/2 turns. Such a range is acceptable while not sacrificing significant reductions from a maximized yield torque of about 150% as compared to an API connection. A thread taper of about 1-1/8 is preferred to maintain a high yield torque (e.g., 150% of an API connection) of the connection while simultaneously maintaining the number of turns (about 6 turns) to achieve snugged from initial stabbing as quickly as possible.

As indicated above, the taper range of 1 in/ft to 1-1/5 in/ft results in a range of between 6-1/2 turn to 5-1/2 turn for the specified preferred embodiment with a pitch of 7.2644mm (0.286 inch) (137.8 threads/m (3.5 threads/inch)). If the parameter of the thread form is relaxed, for example if the pitch is 6.35mm (0.25 inch) (157.5 threads/m (4 threads/inch)), then the taper of 1 in/ft results in about 8 turns required from stab to snug, a value about the same as for a conventional API connection.

Within the taper range between 1 and 1-1/5 (1.2) in/ft., the other thread form variables (pitch, pitch diameter, major diameter, and minor diameter) which affect yield torque and turns to snug may be adjusted from the embodiment specified above. For example, if pitch is reduced from 7.2644mm (0.286 inch) (137.8 threads/m (3-1/2 threads/inch)) to 6.35mm (0.25 inch) (157.5 threads/m (4 threads/inch)) with the other variables constant, the turns required from stab to snug for a taper of 1 in/ft. would be less than 8 turns.

Figure 2 illustrates a preferred embodiment of the double shoulder tool joint of the invention fully made up. According to the embodiment, the thread taper of the box threads 20 and the pin threads 18 should be within a range between about 1 inch/foot and 1.2 inch/foot, and preferably about 1-1/8" per foot.

Description of Preferred Thread Form of a Drill Pipe Tool Joint

Figures 2 and 3 illustrate the thread form of the box threads 20 and pin threads 18 of the connection of Figure 1. It is preferred that the thread form have less than or equal to 157.5 threads/m (4 threads/inch), a common value for API threads. Furthermore as illustrated particularly in Figure 3, threads should have a thread depth $h$ as measured between a major radius $D_{MJ}/2$ and a minor radius $d_{mJ}/2$ that is about one-half of the height of a fundamental triangle 48 that defines the threads. The arrangement allows for larger critical areas of the primary and secondary shoulders and ultimately produces a further increase in torque capacity of the joint. Furthermore, the internal threads 20 and external threads 18 should have a stab flank 34 that makes an angle $\Theta_s$ with the fundamental triangle 48 from about 35 to about 42 degrees and a load flank angle $\Theta_P$ between about 25 and about 34 degrees. Preferably the stab flank angle $\Theta_s$ is about 40 degrees and the load flank angle is about 30 degrees.

The thread form of Figure 3 is also characterized by crests 42 with a transition shape 44 between a load flank 36 and a crest 42. The transition shape 44 is characterized as a radius that is less than or equal to 0.3048mm (0.012 inch) thereby providing a large load flank 36. A transition shape 46 between the stab flank 34 and the crest 42 is equal to or greater than about 1.8542mm (.073 inch) radius thereby reducing the thread crest width and enabling a gradual entry of the mating thread during stab-in and make up. The roots 40 of the thread form are formed in the shape of an ellipse E having a major axis of $E_{MJ}$ and a minor axis $E_{MI}$. The root shape 40 is selected to provide a smooth transition with the stab flank 34 and pressure flank 36. The ellipse shape E produces a stress concentration factor less than that of a 0.9652mm (0.038 inch) root radius.

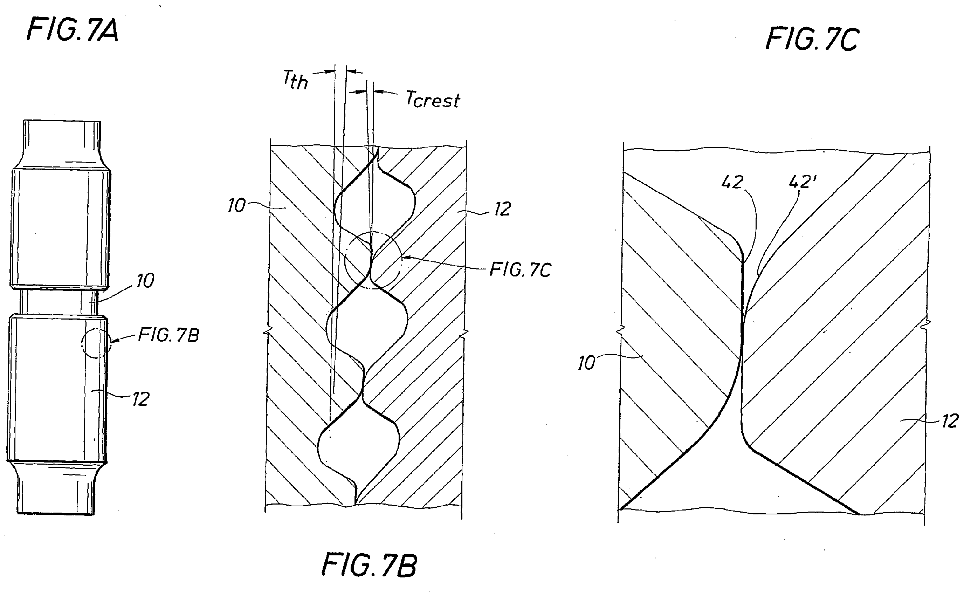

As can be seen in the enlargement of the thread crest 42 in Figure 4, the top of the crest 42 slopes with a crest taper $T_c$ at an angle opposite from that of the thread taper $T_{th}$. Preferably crest taper is about 1 degree. The description above of prior art thread forms by reference to Figures 5 and 6A, 6B and 6C shows that a crest 41 crest taper that is angled approximately the same as the thread taper $T_{th}$ can produce wedging of the threads. Conventional parts of the thread forms are labelled: thread root 39, stab flank 33, load flank 35, transition from load flank to crest 43, and transition from crest to stab flank 45. A thread form with a crest taper $T_c$ at an angle opposite from that of the thread taper $T_{th}$ allows the pin to be more easily stabbed into the box. Figures 7A, 7B and 7C illustrates the advantage, where Figure 7A is a side view of a pin 10 being stabbed into a box 12 of the tool joint and Figures 7B and 7C showing the effect of the reverse angle $T_c$ of the crests of the threads. As seen in the enlarged view of Figure 7C, crest-to-crest wedging of crests 42, 42' is unlikely during stabbing due to the crest slopes being in an opposite direction from the thread taper. Figures 7A to 7C illustrate this advantage by reference to conventional prior art thread forms shown in a stabbing relationship of Figures 6A to 6C.

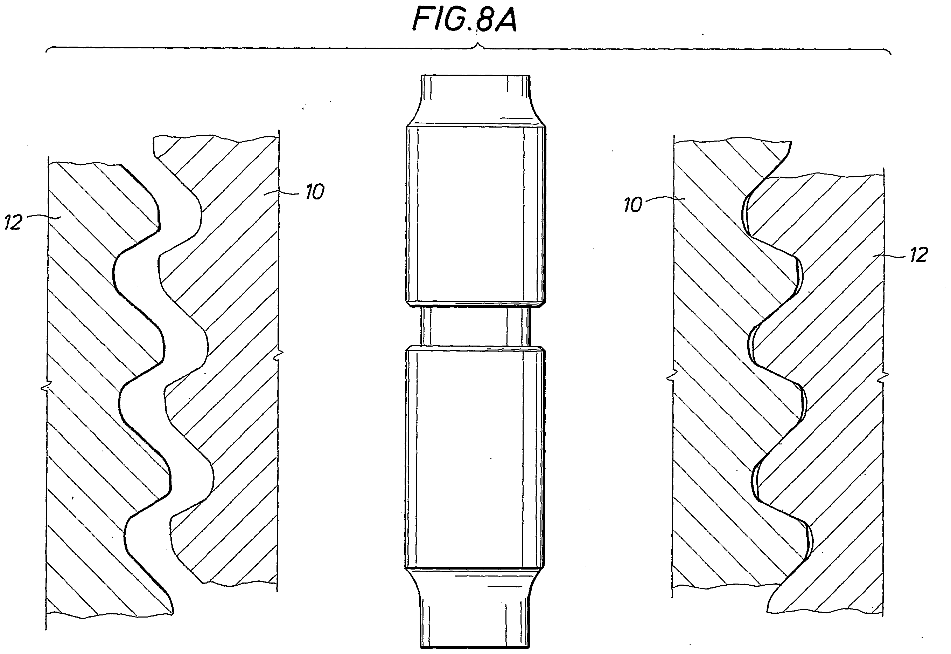

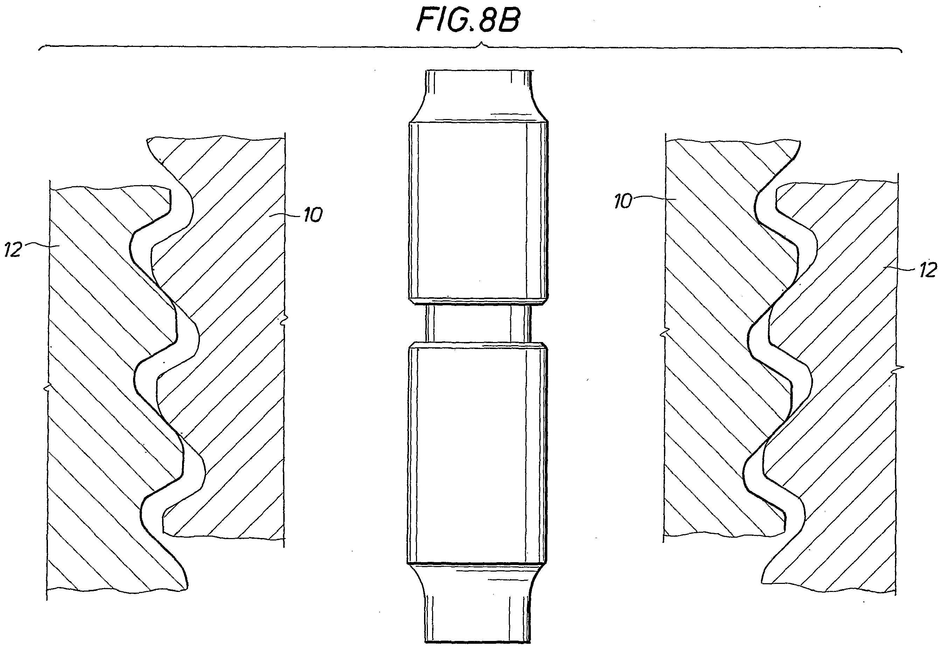

As indicated above, the stab flank angle $\Theta_S$ is increased from a conventional 30° to a preferred 40°. Also mentioned above, the crest-stab flank transition shape 42 is increased to a 1.8542mm (.073 inch) or greater radius. A larger $\Theta_S$ and the large crest-stab flank transition shape allows the connection to more easily center itself after stabbing. Figures 8A and 8B illustrate the effect. The pins in Figure 8A illustrate being stabbed into the box 12 from at an angle from the center line of the box 12. Because of the increased stab angle $\Theta_S$ and the larger crest-stab flank transition shape, the pin 10 moves into alignment with the center line of the box 12 more easily. Furthermore, the probability of jamming of the connection is reduced, because there is less material to get in the way.

**Claims**

1. A double shoulder connection joint (4) for use in a drill stem, having

   a pin (10) with external threads (18) formed between a pin external shoulder (30) and a pin face (26),
   a box (12) with internal threads (20) formed between a box external shoulder (28) and a box internal shoulder (24),
   the box (12) having a counterbore section (14) between the internal threads (20) and the box external shoulder (28),
   the pin having a base section (16) between the external shoulder (30) and the external threads (18), and a nose section (22) between the external pin face (26) and the external threads (18),
   said internal threads (20) and said external threads (18) are arranged and designed for connection with each other so that said box (12) and said pin (10) are connected with a common center-line ($C/L$) and with a Primary Shoulder and Seal ($PS$) formed by said pin external shoulder (30) forced against said box external shoulder (28) and a Secondary Shoulder ($SS$) formed by said pin face (26) forced against said box internal shoulder (24), and
   wherein said connection joint is **characterized by**,
   said internal threads (20) and said external threads (18) having a thread taper ($T_{th}$) which is greater than a thread taper ($T_{th\ lower}$) of 1.0 inch per foot, and which is less than an upper limit ($T_{th\ upper}$) of 1.2 inch per foot.

2. The connection of claim 1, wherein
   thread form characteristics of pitch, thread major diameter, and thread pitch diameter are arranged and designed so that less than 8 turns are required from stabbed to snugged.

3. The connection of claim 2, wherein
   said turns required from stabbed to snugged is about 6 turns with a thread taper of about 1.125 inch per foot.

4. The connection of claim 1, wherein
   said external and internal threads are **characterized by** a thread depth (h), measured between a major radius $\left(\dfrac{D_{MJ}}{2}\right)$ and a minor radius $\left(\dfrac{d_{MI}}{2}\right)$, is about one-half or less of the height ($H$) of a fundamental triangle of the threads.

5. The connection of claim 1, wherein
   said internal threads (20) and said external threads (18) are **characterized by** a stab flank angle ($1_S$) between about 35 and about 42 degrees and a load flank angle ($1_P$) between about 25 and about 34 degrees.

6. The connection of claim 5, wherein
   said stab flank angle ($1_S$) is about 40 degrees and said load flank angle ($1_P$) is about 30 degrees.

7. The connection of claim 1, wherein
   roots of said internal threads (20) and said external threads (18) are formed in a shape of a portion of an ellipse ($E$).

8. The connection of claim 1, wherein
   said internal threads (20) and said external threads (18) are **characterized by** crests having a crest taper ($T_C$) which slopes at an opposite direction from that of said thread taper ($T_{th}$).

9. The connection of claim 5, wherein

   said internal threads (20) and said external threads (18) are **characterized by** crests, and
   a transition shape (44) between said load flank (36) and said crest (42) includes a radius of curvature equal to or less than 0.012 inch,
   thereby providing a large load flank.

10. The connection joint of claim 5, wherein

    said internal threads (20) and said external threads (18) are **characterized by** thread crest widths formed by the truncation of the threads of a total height (H), and

a transition shape (46) between said stab flank (34) of said crest (42) includes a radius of curvature greater than 80% of the said thread crest width, thereby enabling a gradual entry of the mating thread during stab-in and make up.

**11.** The connection of claim 7, wherein

roots of said internal threads (20) and said external threads (18) are **characterized by** an elliptical shape that produces a stress concentration factor less than that of a 0.038" root radius.

**12.** The connection of claim 1, wherein

said internal threads (20) and said external threads (18) are **characterized by** a thread form with a pitch of about 0.25 inches or greater.

**13.** The connection of claim 1, wherein

said nose section (22) of said pin (10) has a length $(L_{PN})$ equal to or greater than a length $(L_{BC})$ of said counterbore section (14).

**14.** The connection of claim 13, wherein

said length $(L_{PN})$ of said pin nose section (22) is about 1.25 inches and said length $(L_{BC})$ of said counterbore section (14) is about 1 inch.

**15.** The connection of claim 1, having

a pin nose cross section area, a counterbore cross-section area and a length $L_{TH}$ of said internal threads (20) connected with said external threads (18) that are designed and arranged such that torque applied to the assembled connection causes substantial yielding to first occur in the weaker of the pin base section or the box counterbore section or of the pin nose.

**16.** The connection of claim 1, wherein

when said pin (10) and said box (12) are connected together, said box external shoulder (28) and said pin external shoulder (30) define the Primary Shoulder and Seal (*PS*) and said pin face (26) and said box internal shoulder (24) define the Secondary Shoulder (*SS*), and

said pin nose length $(L_{PN})$, said counterbore length $(L_{BC})$, a length $(L_{TH})$ of said internal threads (20) connected with said external threads (18), pin nose cross-sectional area $(CS_{PN})$, box counterbore area $(CS_{BC})$, pin base section area and tool joint outer and inner diameters $(TJ_{OD}, TJ_{ID2})$ are selected whereby Secondary Shoulder (*SS*) stress and Primary Shoulder and Seal (*PS*) stress at surface make-up are within 70% of each other depending on manufacturing tolerances of said lengths, areas and diameters.

**17.** The connection of claim 2, wherein

said thread taper $(T_{TH})$ is about 1.125 inch per foot
said external and internal threads are **characterized by** a thread depth (h), measured between a major radius

$$\left(\frac{D_{MJ}}{2}\right)$$ and a minor radius $$\left(\frac{d_{MI}}{2}\right),$$ that is about one-half of the height (H) of a fundamental triangle of the threads,

said internal threads (20) and said external threads (18) are **characterized by** a stab flank angle $(1_S)$ between about 35 and about 42 degrees and a load flank angle $(1_P)$ between about 25 and about 34 degrees.

**18.** The connection of claim 2, wherein

said thread taper $(T_{th})$ is about 1.125 inch per foot.
said stab flank angle $(1_S)$ is about 40 degrees and said load flank angle is about 30 degrees,
roots of said internal threads (20) and said external threads (18) are formed in a shape of a portion of an ellipse (E),
said internal threads (20) and said external threads (18) have a threaded taper $(T_{th})$, and
said internal threads (20) and said external threads (18) are **characterized by** crests having a crest taper $(T_C)$ which slopes in an opposite direction than that of said thread taper $(T_{TH})$.

**19.** The connection of claim 18, wherein

said internal threads (20) and said external threads (18) are **characterized by** a thread form with a pitch of about 0.25 inch or greater, said length ($L_{PN}$) of said pin nose section (22) is about 1.25 inches and said length ($L_{BC}$) of said counterbore section (14) is about 1 inch, and said pin nose cross section area, said counterbore cross-section area and a length $L_{TH}$ of said internal threads (20) connected with said external threads (18) are designed and arranged such that strength of the connected threads with torque applied is greater than the strength of said pin nose (22) or said box counterbore (14) or said pin base.

**20.** The connection of claim 19, wherein

when said pin (10) and said box (12) are connected together, said box external shoulder (28) and said pin external shoulder (30) define the Primary Shoulder and Seal ($PS$) and said pin face (26) and said box internal shoulder (24) define the Secondary Shoulder ($SS$), and said pin nose length ($L_{PN}$), said counterbore length ($L_{BC}$), a length ($L_{TH}$) of said internal threads (20) connected with said external threads (18), pin nose cross-sectional area ($CS_{PN}$), box counterbore area ($CS_{BC}$) and tool joint outer and inner diameters ($TJ_{OD}$, $TJ_{ID2}$) are selected whereby Secondary Shoulder ($SS$) longitudinal stress and Primary Shoulder and Seal ($PS$) longitudinal stress at surface make-up torque are within 70% of each other, depending on manufacturing tolerances of said lengths, areas and diameters.

**Patentansprüche**

**1.** Doppelschulter-Anschlussverbindung (4) zum Gebrauch in einer Bohrstange, Folgendes beinhaltend:

einen Stift (10) mit Außengewindegängen (18), welche zwischen einer äußeren Stiftschulter (30) und einer Stiftseite (26) gebildet sind, eine Box (12) mit Innengewindegängen (20), welche zwischen einer äußeren Boxschulter (28) und einer inneren Boxschulter (24) gebildet sind, wobei die Box (12) einen Gegenbohrungsabschnitt (14) zwischen den Innengewindegängen (20) und der äußeren Boxschulter (28) besitzt, wobei der Stift einen Basisabschnitt (16) zwischen der äußeren Schulter (30) und den Außengewindegängen (18), und einen Nasenabschnitt (22) zwischen der äußeren Stiftseite (26) und den Außengewindegängen (18) besitzt, wobei die Innengewindegänge (20) und die Außengewindegänge (18) zur Verbindung miteinander angeordnet und konzipiert sind, so dass die Box (12) und der Stift (10) mit einer gemeinsamen Mittellinie ($C/L$) und mit einer Primären Schulter und Dichtung ($PS$) verbunden sind, welche durch die äußere Schulter des Stifts (30) gebildet wird, welche an die äußere Schulter der Box (28) gezwängt wird und mit einer Sekundären Schulter ($SS$), welche durch die Stiftseite (26) gebildet wird, welche an die innere Schulter der Box (24) gezwängt wird, und wobei die Anschlussverbindung **dadurch gekennzeichnet ist, dass**: die Innengewindegänge (20) und die Außengewindegänge (18) eine Gewindeverjüngung ($T_{th}$) besitzen, welche größer ist als eine Gewindeverjüngung ($T_{th\ lower}$) von 1,0 Zoll pro Fuß, und welche kleiner ist als ein oberer Grenzwert ($T_{th\ upper}$) von 1,2 Zoll pro Fuß.

**2.** Anschluss nach Anspruch 1, bei welchem:
Gewindeformmerkmale der Steigung, des Gewindeaußendurchmessers und des Gewindenenndurchmessers geeignet und so konzipiert sind, dass weniger als 8 Drehungen notwendig sind, um vom aufgesteckten zum angezogenen Zustand zu gelangen.

**3.** Anschluss nach Anspruch 2, bei welchem:
die Drehungen, welche erforderlich sind, um vom aufgesteckten zum angezogenen Zustand zu gelangen, ungefähr 6 Drehungen bei einer Gewindeverjüngung von 1,125 Zoll pro Fuß betragen.

**4.** Anschluss nach Anspruch 1, bei welchem:
die Außengewindegänge und die Innengewindegänge durch eine Gewindetiefe (h) gekennzeichnet sind, gemessen zwischen einem Außenradius $\left(\dfrac{D_{MJ}}{2}\right)$ und einem Innenradius $\left(\dfrac{d_{MI}}{2}\right)$, welche ungefähr eine Hälfte oder weniger als die Höhe (*H*) eines grundlegenden Dreiecks der Gewindegänge beträgt.

5. Anschluss nach Anspruch 1, bei welchem:
die Außengewindegänge (20) und die Innengewindegänge (18) durch einen Aufsetzflankenwinkel (*1ₛ*) zwischen ungefähr 35 und ungefähr 42 Grad und einen Lastflankenwinkel (*1_P*) zwischen ungefähr 25 und ungefähr 34 Grad gekennzeichnet sind.

6. Anschluss nach Anspruch 5, bei welchem:
der Aufsetzflankenwinkel (*1ₛ*) ungefähr 40 Grad beträgt und der Lastflankenwinkel (*1_P*) ungefähr 30 Grad beträgt.

7. Anschluss nach Anspruch 1, bei welchem:
Gründe der Innengewindegänge (20) und der Außengewindegänge (18) in einer Form eines Ellipsenabschnitts (*E*) gebildet sind.

8. Anschluss nach Anspruch 1, bei welchem:
die Innengewindegänge (20) und die Außengewindegänge (18) durch Kämme mit einer Kammverjüngung (*T_C*) gekennzeichnet sind, welche in einer entgegengesetzten Richtung von derjenigen der Gewindeverjüngung (*T_{th}*) abfällt.

9. Anschluss nach Anspruch 5, bei welchem:

die Innengewindegänge (20) und die Außengewindegänge (18) durch Kämme gekennzeichnet sind, und
eine Übergangsform (44) zwischen der Lastflanke (36) und dem Kamm (42) einen Krümmungsradius enthält, welcher gleich oder kleiner als 0,012 Zoll ist,
wodurch eine große Lastflanke bereitgestellt wird.

10. Anschlussverbindung nach Anspruch 5, bei welcher:

die Innengewindegänge (20) und die Außengewindegänge (18) durch Gewindekammbreiten gekennzeichnet sind, welche durch Verkürzung der Gewindegänge auf eine Gesamthöhe (*H*) gebildet werden, und
eine Übergangsform (44) zwischen der Aufsatzflanke (34) des Kammes (42) einen Krümmungsradius größer als 80 % der Gewindekammbreite enthält, wodurch ein gradueller Eintritt des Gegengewindes beim Aufstecken und Koppeln erreicht wird.

11. Anschluss nach Anspruch 7, bei welchem:
Gründe der Innengewindegänge (20) und der Außengewindegänge (18) durch eine elliptische Form gekennzeichnet sind, welche einen geringeren Spannungskonzentrationsfaktor erzeugt als derjenige eines Grundradius von 0,038 Zoll.

12. Anschluss nach Anspruch 1, bei welchem:
die Innengewindegänge (20) und die Außengewindegänge (18) durch eine Gewindegangform mit einer Steigung von ungefähr 0,25 Zoll oder größer gekennzeichnet sind.

13. Anschluss nach Anspruch 1, bei welchem:
der Nasenabschnitt (22) des Stifts (10) eine Länge (*L_{PN}*) besitzt, welche gleich einer Länge oder größer als eine Länge (*L_{BC}*) des Gegenbohrungsabschnitts (14) ist.

14. Anschluss nach Anspruch 13, bei welchem:
die Länge (*L_{PN}*) des Stiftnasenabschnitts (22) ungefähr 1,25 Zoll beträgt und die Länge (*L_{BC}*) des Gegenbohrungsabschnitts (14) ungefähr 1 Zoll beträgt.

15. Anschluss nach Anspruch 1, welcher Folgendes besitzt:
eine Stiftnasenquerschnittsfläche, eine Gegenbohrungsquerschnittsfläche und eine Länge $L_{TH}$ der Innengewindegänge (20), welche mit den Außengewindegängen (18) verbunden sind, welche in der Weise konzipiert und angeordnet sind, dass ein auf die montierte Verbindung aufgebrachtes Drehmoment ein beträchtliches Nachgeben zunächst in dem schwächeren Element der Gruppe verursacht, bestehend aus dem Stiftbasisabschnitt, dem Box-Gegenbohrungsabschnitt oder der Stiftnase.

**16.** Anschluss nach Anspruch 1, bei welchem: wenn die Nase (10) und die Box (12) miteinander verbunden sind, die äußere Schulter der Box (28) und die äußere Schulter des Stifts (30) die Primäre Schulter und Dichtung *(PS)* definieren und die Stiftseite (26) und die innere Schulter der Box (24) die Sekundäre Schulter *(SS)* definieren, und die Stiftnasenlänge *(L_{PN})*, die Gegenbohrungslänge *(L_{BC})*, eine Länge *(L_{TH})* der Innengewindegänge (20), welche mit den Außengewindegängen (18) verbunden sind, die Stiftnasenquerschnittsfläche *(CS_{PN})*, die Boxgegenbohrungsfläche *(CS_{BC})*, die Stiftbasisquerschnittsfläche und der Werkzeugverbindungsaußen- und -innendurchmesser *(TJ_{OD}, TJ_{ID2})* ausgewählt sind, wodurch die Spannung der Sekundären Schulter *(SS)* und die Spannung der Primären Schulter und Dichtung *(PS)* bei Oberflächen-Kopplung innerhalb von 70 % voneinander liegen, abhängig von den Fertigungstoleranzen dieser Längen, Flächen und Durchmesser.

**17.** Anschluss nach Anspruch 2, bei welchem:

die Gewindeverjüngung *(T_{TH})* ungefähr 1,125 Zoll pro Fuß beträgt
die Außengewindegänge und die Innengewindegänge durch eine Gewindetiefe (h) gekennzeichnet sind, gemessen zwischen einem Außenradius $\left(\dfrac{D_{MJ}}{2}\right)$ und einem Innenradius $\left(\dfrac{d_{MI}}{2}\right)$, welche ungefähr die Hälfte der Höhe (H) eines grundlegenden Dreiecks der Gewindegänge beträgt.
die Außengewindegänge (20) und die Innengewindegänge (18) durch einen Aufsetzflankenwinkel *(1_s)* zwischen ungefähr 35 und ungefähr 42 Grad und einen Lastflankenwinkel *(1_P)* zwischen ungefähr 25 und ungefähr 34 Grad gekennzeichnet sind.

**18.** Anschluss nach Anspruch 2, bei welchem:

die Gewindeverjüngung *(T_{th})* ungefähr 1,125 Zoll pro Fuß beträgt,
der Aufsetzflankenwinkel *(1_s)* ungefähr 40 Grad beträgt und der Lastflankenwinkel ungefähr 30 Grad beträgt,
Gründe der Innengewindegänge (20) und der Außengewindegänge (18) in einer Form eines Ellipsenabschnitts (E) gebildet sind,
die Innengewindegänge (20) und die Außengewindegänge (18) eine mit Gewinde versehene Verjüngung *(T_{th})* besitzen, und
die Innengewindegänge (20) und die Außengewindegänge (18) durch Kämme gekennzeichnet sind mit einer Kammverjüngung *(T_C)*, welche in einer entgegengesetzten Richtung von derjenigen der Gewindeverjüngung *(T_{TH})* abfällt.

**19.** Anschluss nach Anspruch 18, bei welchem:

die Innengewindegänge (20) und die Außengewindegänge (18) durch eine Gewindegangform mit einer Steigung von ungefähr 0,25 Zoll oder größer gekennzeichnet sind,
die Länge *(L_{PN})* des Stiftnasenabschnitts (22) ungefähr 1,25 Zoll beträgt und die Länge *(L_{BC})* des Gegenbohrungsabschnitts (14) ungefähr 1 Zoll beträgt, und
die Stiftnasenquerschnittsfläche, die Gegenbohrungsquerschnittsfläche und eine Länge $L_{TH}$ der Innengewindegänge (20), welche mit den Außengewindegängen (18) verbunden sind, in der Weise konzipiert und angeordnet sind, dass die Stärke der verbundenen Gewindegänge mit aufgebrachtem Drehmoment größer ist als die Stärke der Stiftnase (22) oder der Box-Gegenbohrung (14) oder der Stiftbasis.

**20.** Anschluss nach Anspruch 19, bei welchem:

wenn die Nase (10) und die Box (12) miteinander verbunden sind, die äußere Schulter der Box (28) und die äußere Schulter des Stifts (30) die Primäre Schulter und Dichtung *(PS)* definieren und die Stiftseite (26) und die innere Schulter der Box (24) die Sekundäre Schulter *(SS)* definieren, und
die Stiftnasenlänge *(L_{PN})*, die Gegenbohrungslänge *(L_{BC})*, eine Länge *(L_{TH})* der Innengewindegänge (20), welche mit den Außengewindegängen (18) verbunden sind, die Stiftnasenquerschnittsfläche *(CS_{PN})*, die Boxgegenbohrungsfläche *(CS_{BC})* und der Werkzeugverbindungsaußen- und -innendurchmesser *(TJ_{OD}, TJ_{ID2})* ausgewählt sind, wodurch die Längsspannung der Sekundären Schulter *(SS)* und die Längsspannung der Primären Schulter und Dichtung *(PS)* bei Oberflächen-Kopplungsdrehmoment innerhalb von 70 % voneinander liegen, abhängig von den Fertigungstoleranzen dieser Längen, Flächen und Durchmesser.

**Revendications**

1. Joint de raccordement à double épaulement (4) pour utilisation dans une tige de forage, présentant

   une broche (10) avec des filets externes (18) formés entre un épaulement externe de broche (30) et une face de broche (26),
   un boîtier (12) avec des filets internes (20) formés entre un épaulement externe de boîtier (28) et un épaulement interne de boîtier (24),
   le boîtier (12) présentant une section de lamage (14) entre les filets internes (20) et l'épaulement externe du boîtier (28),
   la broche présentant une section de base (16) entre l'épaulement externe (30) et les filets externes (18), et une section de nez (22) entre la face de broche externe (26) et les filets externes (18),
   lesdits filets internes (20) et lesdits filets externes (18) sont agencés et conçus afin d'être raccordés les uns aux autres, de sorte que ledit boîtier (12) et ladite broche (10) sont raccordés avec une ligne centrale commune (*C/L*) et avec un Épaulement Primaire et Joint (*PS*) formé par ledit épaulement externe de broche (30) forcé contre ledit épaulement externe de boîtier (28) et un Épaulement Secondaire (*SS*) formé par ladite face de broche (26) forcée contre ledit épaulement interne de boîtier (24), et
   dans lequel ledit joint de raccordement est **caractérisé par**,
   lesdits filets internes (20) et lesdits filets externes (18) présentant un cône de filetage ($T_{th}$) qui est supérieur à un cône de filetage ($T_{th\ inférieur}$) de 1,0 pouce par pied, et qui est inférieur à une limite supérieure ($T_{th\ supérieur}$) de 1,2 pouce par pied.

2. Raccordement selon la revendication 1, dans lequel
   des caractéristiques de forme de filet de pas, de diamètre majeur du filet et de diamètre de pas de filetage sont agencées et conçues de sorte que moins de 8 tours soient requis de l'introduction jusqu'au serrage.

3. Raccordement selon la revendication 2, dans lequel
   lesdits tours requis de l'introduction jusqu'au serrage représentent environ 6 tours avec un cône de filetage d'environ 1,125 pouces par pied.

4. Raccordement selon la revendication 1, dans lequel
   lesdits filets externes et internes sont **caractérisés par** une profondeur de filet (*h*), mesurée entre un rayon majeur

   $\left(\dfrac{D_{MJ}}{2}\right)$ et un rayon mineur $\left(\dfrac{d_{MI}}{2}\right)$, qui représente environ la moitié ou moins de la hauteur (*H*) d'un triangle fondamental des filets.

5. Raccordement selon la revendication 1, dans lequel
   lesdits filets internes (20) et lesdits filets externes (18) sont **caractérisés par** un angle de guidage des filets ($l_s$) compris entre environ 35 et environ 42 degrés et un angle de flanc de charge ($l_p$) compris entre environ 25 et environ 34 degrés.

6. Raccordement selon la revendication 5, dans lequel
   ledit angle de guidage des filets ($l_s$) est d'environ 40 degrés et ledit angle de flanc de charge ($l_p$) est d'environ 30 degrés.

7. Raccordement selon la revendication 1, dans lequel
   les racines desdits filets internes (20) et desdits filets externes (18) sont en forme d'une partie d'une ellipse (*E*).

8. Raccordement selon la revendication 1, dans lequel
   lesdits filets internes (20) et lesdits filets externes (18) sont **caractérisés par** des crêtes présentant un cône de crête (*Tc*) qui s'incline dans une direction opposée par rapport à celle dudit cône de filet (*T<sub>th</sub>*).

9. Raccordement selon la revendication 5, dans lequel

   lesdits filets internes (20) et lesdits filets externes (18) sont **caractérisés par** des crêtes, et
   une forme de transition (44) entre ledit flanc de charge (36) et ladite crête (42) inclut un rayon de courbure égal ou inférieur à 0,012 pouce,
   en fournissant ainsi un grand flanc de charge.

10. Joint de raccordement selon la revendication 5, dans lequel

    lesdits filets internes (20) et lesdits filets externes (18) sont **caractérisés par** des largeurs de crête de filet formées par la troncation des filets d'une hauteur totale (H), et
    une forme de transition (46) entre ledit flanc de guidage (34) de ladite crête (42) inclut un rayon de courbure supérieur à 80 % de ladite largeur de crête de filet, en permettant ainsi une entrée progressive du filet d'adaptation pendant le guidage et le rattrapage.

11. Raccordement selon la revendication 7, dans lequel
    les racines desdits filets internes (20) et desdits filets externes (18) sont **caractérisées par** une forme elliptique qui produit un facteur de concentration de contrainte inférieur à un rayon de fond de filet de 0,038".

12. Raccordement selon la revendication 1, dans lequel
    lesdits filets internes (20) et lesdits filets externes (18) sont **caractérisés par** une forme de filet avec un pas d'environ 0,25 pouce ou plus.

13. Raccordement selon la revendication 1, dans lequel
    ladite section de nez (22) de ladite broche (10) présente une longueur (*L<sub>PN</sub>*) égale ou supérieure à une longueur (*L<sub>BC</sub>*) de ladite section de lamage (14).

14. Raccordement selon la revendication 13, dans lequel
    ladite longueur (*L<sub>PN</sub>*) de ladite section de nez de broche (22) est d'environ 1,25 pouce et ladite longueur (*L<sub>BC</sub>*) de ladite section de lamage (14) est d'environ 1 pouce.

15. Raccordement selon la revendication 1, présentant
    une superficie de coupe transversale de nez de broche, une superficie de coupe transversale de lamage et une longueur *L<sub>TH</sub>* desdits filets internes (20) raccordés auxdits filets externes (18) qui sont conçues et agencées de sorte qu'un couple appliqué au raccord assemblé provoque un rendement substantiel qui se produit en premier lieu dans la plus faible parmi la section de base de broche ou la section de lamage de boîtier ou de nez de broche.

16. Raccordement selon la revendication 1, dans lequel

    lorsque ladite broche (10) et ledit boîtier (12) sont raccordés ensemble, ledit épaulement externe de boîtier (28) et ledit épaulement externe de broche (30) définissent l'Épaulement Primaire et le Joint *(PS)* et ladite face de broche (26) et ledit épaulement interne de boîtier (24) définissent l'Épaulement Secondaire (*SS*), et
    ladite longueur de nez de broche (*L<sub>PN</sub>*), ladite longueur de lamage (*L<sub>BC</sub>*), une longueur (*L<sub>TH</sub>*) desdits filets internes (20) raccordés auxdits filets externes (18), la superficie de coupe transversale de nez de broche (*CS<sub>PN</sub>*), la superficie de lamage de boîtier (*CS<sub>BC</sub>*), la superficie de coupe de base de broche et les diamètres intérieur et extérieur du joint d'outil (*TJ<sub>OD</sub>*, *TJ<sub>ID2</sub>*) sont sélectionnés moyennant quoi une contrainte de l'Épaulement Secondaire (*SS*) et de l'Épaulement Primaire et du Joint (*PS*) au rattrapage de surface sont de l'ordre de 70 % l'un par rapport à l'autre en fonction des tolérances de fabrication desdites longueurs, superficies et diamètres.

17. Raccordement selon la revendication 2, dans lequel

    ledit cône de filet (*T<sub>th</sub>*) est d'environ 1,125 pouce par pied
    lesdits filets externes et internes sont **caractérisés par** une profondeur de filet *(h)*, mesurée entre un rayon

majeur $\left(\dfrac{D_{MJ}}{2}\right)$ et un rayon mineur $\left(\dfrac{d_{MI}}{2}\right)$, qui représente environ la moitié de la hauteur (*H*) d'un triangle fondamental des filets,

lesdits filets internes (20) et lesdits filets externes (18) sont **caractérisés par** un angle de guidage des filets ($I_s$) compris entre environ 35 et environ 42 degrés et un angle de flanc de charge ($I_p$) compris entre environ 25 et environ 34 degrés.

**18.** Raccordement selon la revendication 2, dans lequel

ledit cône de filet ($T_{th}$) est d'environ 1,125 pouce par pied.
ledit angle de guidage de filet ($I_s$) est d'environ 40 degrés et ledit angle de flanc de charge est d'environ 30 degrés,
les racines desdits filets internes (20) et desdits filets externes (18) sont réalisées en forme d'une portion d'une ellipse (*E*),
lesdits filets internes (20) et lesdits filets externes (18) ont un cône fileté ($T_{th}$), et
lesdits filets internes (20) et lesdits filets externes (18) sont **caractérisés par** des crêtes présentant un cône de crête ($T_C$) avec des pentes dans une direction opposée à celle dudit cône de filet ($T_{th}$).

**19.** Raccordement selon la revendication 18, dans lequel

lesdits filets internes (20) et lesdits filets externes (18) sont **caractérisés par** une forme de filet avec un pas d'environ 0,25 pouce ou plus,
ladite longueur ($L_{PN}$) de ladite section de nez de broche (22) est d'environ 1,25 pouce et ladite longueur ($L_{BC}$) de ladite section de lamage (14) est d'environ 1 pouce, et
ladite superficie en coupe transversale de nez de broche, ladite superficie en coupe transversale du lamage et une longueur $L_{TH}$ desdits filets internes (20) raccordés auxdits filets externes (18) sont conçues et agencées de sorte que la force des filets raccordés avec un couple appliqué est supérieure à la force dudit nez de broche (22) ou dudit lamage de boîtier (14) et de ladite base de broche.

**20.** Raccordement selon la revendication 19, dans lequel

lorsque ladite broche (10) et ledit boîtier (12) sont reliés ensemble, ledit épaulement externe de boîtier (28) et ledit épaulement externe de broche (30) définissent l'Épaulement Primaire et Joint (*PS*) et ladite face de broche (26) et ledit épaulement interne de boîtier (24) définissent l'Épaulement Secondaire (*SS*), et
ladite longueur de nez de broche ($L_{PN}$), ladite longueur de lamage ($L_{BC}$), une longueur ($L_{TH}$) desdits filets internes (20) raccordés auxdits filets externes (18), une superficie en coupe transversale de nez de broche ($CS_{PN}$), une superficie de lamage de boîtier ($CS_{BC}$) et des diamètres extérieur et intérieur de joint d'outil ($TJ_{OD}$, $TJ_{ID2}$) sont sélectionnés moyennant quoi une contrainte longitudinale d'Épaulement Secondaire (*SS*) et une contrainte longitudinale d'Épaulement Primaire et de Joint (*PS*) à un couple de rattrapage de surface sont de l'ordre de 70 % l'un par rapport à l'autre, en fonction des tolérances de fabrication desdites longueurs, superficies et diamètres.

FIG.1

FIG.2

FIG.3

FIG.4

LINE PARALLEL TO $\frac{DP}{2}$

EP 1 861 578 B1

**FIG.5**
*(PRIOR ART)*

**FIG.6A**
*(PRIOR ART)*

*FIG.6B (PRIOR ART)*

*FIG.6C (PRIOR ART)*

EP 1 861 578 B1

*FIG.7A*

*FIG.7B*

*FIG.7C*

$T_{th}$

$T_{crest}$

10

12

FIG.7C

42   42'

10

12

## FIG.8A

EP 1 861 578 B1

## FIG.8B

EP 1 861 578 B1

FIG.9

EP 1 861 578 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2532632 A
- US 4558431 A
- US 4548431 A
- US 6513804 B
- US 5492375 A
- US 6447025 B
- US 6244631 B
- US 5908212 A